# EUROPÄISCHE PATENTSCHRIFT

(11) **EP 1 928 702 B1**
(45) Veröffentlichungstag und Bekanntmachung des Hinweises auf die Patenterteilung: **09.06.2010**
(21) Anmeldenummer: 06793302.8
(22) Anmeldetag: 07.09.2006
(51) Int. Cl.: B60R 16/03, B60R 21/017

(54) **STEUERGERÄT FÜR DEN PERSONENSCHUTZ**
PERSONAL PROTECTION CONTROL DEVICE
DISPOSITIF DE COMMANDE DESTINE A LA PROTECTION DE PERSONNES

(30) Priorität: 22.09.2005 DE 102005045233
(43) Veröffentlichungstag der Anmeldung: 11.06.2008
(73) Patentinhaber: ROBERT BOSCH GMBH, 70442 Stuttgart (DE)
(72) Erfinder: SCHUMACHER, Hartmut, 71691 Freiberg (DE); WIRTH, Jens, 74232 Abstatt (DE)
(86) Internationale Anmeldenummer: PCT/EP2006/066104
(87) Internationale Veröffentlichungsnummer: WO 2007/033907

(56) Entgegenhaltungen:
- WO-A-91/00636
- WO-A-2004/006422
- WO-A-2005/035317
- DE-A1- 4 313 124
- DE-A1- 19 505 334
- DE-A1-102004 010 135

## Beschreibung

### Stand der Technik

Die Erfindung betrifft ein Steuergerät für den Personenschutz nach der Gattung des unabhängigen Patentanspruchs.

Aus DE 10 2004 010 135 A ist ein Steuergerät für den Personenschutz bekannt mit einer Energiereserve, die mittels einer Batteriespannung geladen wird und aus der das Steuergerät mit Energie versorgt wird, und einer ersten Spannungsversorgungsschaltung, die mit der Energiereserve verbunden ist und eine ersten Spannung bereitstellt.

Aus EP 1 204 544 B1 ist es bekannt, für die Aktivierung von Rückhalteeinrichtungen einen Energiespeicher im Fahrzeug vorzusehen, der bei einer Unterbrechung der Stromversorgung die Rückhalteeinrichtungen noch mit Energie versorgt, sodass deren Auslösung gewährleistet werden kann. Dafür wird häufig ein Elektrolytkondensator verwendet.

### Vorteile der Erfindung

Das erfindungsgemäße Steuergerät für den Personenschutz mit den Merkmalen des unabhängigen Patentanspruchs hat dem gegenüber den Vorteil, dass zwei Spannungsversorgungsschaltungen vorgesehen sind, wobei eine erste Spannungsversorgungsschaltung eine Spannung der Energiereserve abwärts wandelt und daraus mehrere Spannungspegel, die vorgegeben sind, bereit stellt. Die zweite Spannungsversorgungsschaltung ist einfacher als die erste Spannungsversorgungsschaltung aufgebaut und weist eine Widerstandsschaltung, einen Transistor und einen Spannungsregler auf und stellt wenigstens einen weiteren Spannungspegel bereit. Damit ist es möglich, die Leistungsfähigkeit der ersten Spannungsversorgungsschaltung in Bezug auf die Wandelfähigkeit durch die zweite Spannungsversorgungsschaltung zu unterstützen. Durch die steigende Komplexität der Personenschutzsysteme durch eine steigende Anzahl von externen Sensoren, wie Seitenaufprallsensoren oder Upfront-Sensoren oder Fußgängerschutzsensoren oder auch Umfeldsensoren wird die Stromaufnahme des Personenschutzsystems immer größer. Diese Stromaufnahme kann für eine Spannungsversorgungsschaltung mit einem Abwärtswandler zuviel sein oder ihn bis an die Grenzen belasten. Daher wird erfindungsgemäß vorgeschlagen, eine zweite Spannungsversorgungsschaltung vorzusehen, die einfacher als die erste Spannungsversorgungsschaltung gestaltet ist und wenigstens einen weiteren Spannungspegel zur Verfügung stellt.

Durch die in den abhängigen Ansprüchen aufgeführten Maßnahmen und Weiterbildungen sind vorteilhafte Verbesserungen des im unabhängigen Patentanspruch angegebenen Steuergeräts für den Personenschutz möglich.

Besonders vorteilhaft ist, dass die erste Spannungsversorgungsschaltung als die vorgegebenen Spannungspegel eine Zündspannung und wenigstens drei unterschiedliche Spannungspegel bereitstellt. Die unterschiedlichen Spannungspegel sind notwendig durch die unterschiedlichen Elektronikbausteine, die im Steuergerät verbaut werden.

Vorteilhafter Weise ist der Spannungsregler als 2-Punkt-Spannungsregler ausgebildet. Dies bedeutet, dass wenn der Spannungsregler ein Unterschreiten eines vorgegebenen Spannungswerts beim bereitzustellenden Spannungspegel feststellt, der Spannungsregler derart reagiert, dass der Spannungspegel wieder erhöht wird. Dies kann durch Beeinflussung des Transistors geschehen oder Hinzuschalten eines parallelen Widerstands oder andere bekannte Methoden aus der Schaltungstechnik. Überschreitet der gemessene Pegel einen weiteren vorgegebenen Schwellwert, dann schaltet sich der Spannungsregler wieder aus, sodass die Spannung wieder absinken kann. Diese beiden Schwellwerte sind unterschiedlich, sodass zwei Punkte vorliegen und sich damit der Begriff 2-Punkt-Regler erklärt.

Es ist weiterhin vorteilhaft, dass die zweite Spannungsversorgungsschaltung derart mit wenigstens einem externen Sensor verbunden ist, dass die zweite Spannungsversorgungsschaltung den wenigstens einen externen Sensor mit dem weiteren Spannungspegel versorgt. Damit werden der zweiten Spannungsversorgungsschaltung solche Komponenten zugewiesen, die für jede Fahrzeugplattform unterschiedlich sein können, je nach dem, wie viele externe Sensoren, also Beschleunigungssensoren, Drucksensoren, Temperatursensoren oder Umfeldsensoren oder Kontaktsensoren angeschlossen sind. Es ist jedoch möglich, dass die zweite Spannungsversorgungsschaltung auch anstatt oder zusätzlich zur Versorgung von internen Komponenten vorgesehen sein kann.

In einer Weiterbildung ist vorgesehen, dass der Spannungsregler mit einem Prozessor verbunden ist, sodass der Prozessor den Spannungsregler steuern kann. Diese Steuerung kann beispielsweise ein einfaches Ein- oder Ausschalten sein, um den Spannungsregler beispielsweise für einen Test ein- oder auszuschalten. Es ist jedoch möglich, dass der Mikrocontroller als Prozessor über seinen Analog-Digital-Wandler selbst eine Spannungsmessung vornimmt, sodass damit dann eine Regelung vorliegt, denn dann wird der Regler in Abhängigkeit vom Messwert des Analog-Digital-Wandlers beeinflusst.

In einer vorteilhaften Ausgestaltung des erfindungsgemäßen Steuergeräts ist vorgesehen, dass der Spannungsregler mit der Widerstandsschaltung derart verbunden ist, dass der Spannungsregler einen Spannungsabfall über der Widerstandsschaltung messen kann und in Abhängigkeit von dieser Messung den Transistor ansteuert. Dabei kann die Ansteuerung graduell erfolgen, indem der Widerstand des Transistors gesteuert wird oder es kann sich auch um ein Ein- oder Ausschalten handeln.

Es ist weiterhin möglich, dass der Prozessor des Steuergeräts mit der Regelschaltung derart verbunden ist, dass der Prozessor über seinen Analog-Digital-Wandler die Ausgangsspannung für die externen Sensoren misst und in Abhängigkeit davon die Regelschaltung, das ist die zweite Spannungsversorgungsschaltung, beeinflusst. Auch ein Spannungsteiler kann vorgesehen sein, um die Ausgangsspannung an den Analog-Digital-Wandler anzuschließen.

### Zeichnung

Ausführungsbeispiele der Erfindung sind in der Zeichnung dargestellt und werden in der nachfolgenden Beschreibung näher erläutert.

Es zeigen:
- Figur 1: ein erstes Schaltbild des erfindungsgemäßen Steuergeräts und
- Figur 2: ein zweites Schaltbild.

### Beschreibung

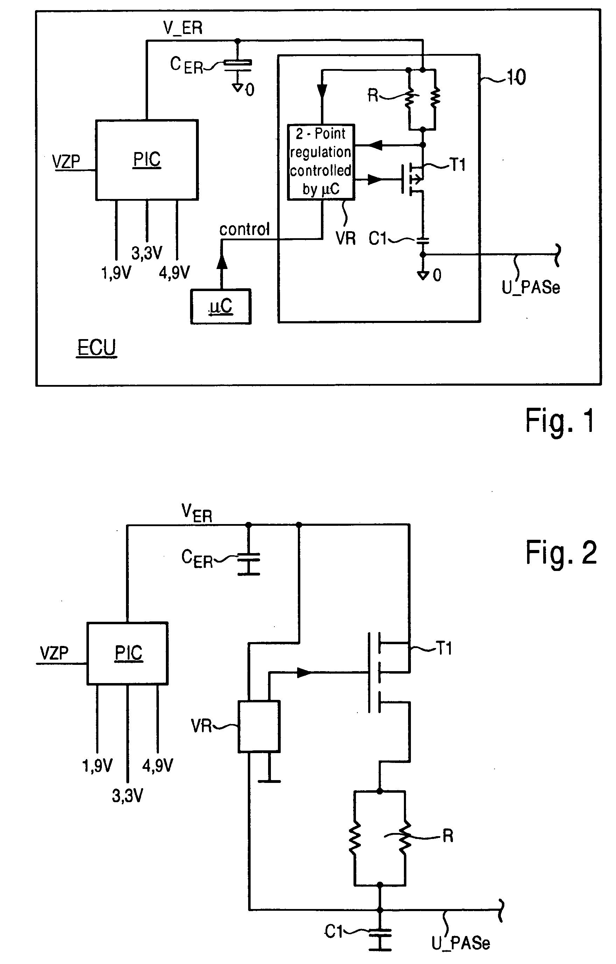

Figur 1 zeigt in einem ersten Schaltbild das erfindungsgemäße Steuergerät. Es sind hier nur die wesentlichen Teile, die für das Verständnis der Erfindung wesentlich sind, dargestellt. Ein tatsächliches Steuergerät weist weit mehr Komponenten auf. Das Steuergerät ECU weist einen Energiereservekondensator C_{ER} auf. Dieser Kondensator C_{ER} wird über eine Wandlerschaltung, die hier nicht dargestellt ist, aus der Batteriespannung des Kraftfahrzeugs aufgeladen, beispielsweise auf eine Spannung von ca. 35 Volt. Damit liegt dann die Spannung V_{ER} vor. Die Energie im Kondensator kann entweder nur im Autarkiefall, das ist der Abriss der Batteriespannung oder dauerhaft zur Energieversorgung des Steuergeräts ECU für den Personenschutz verwendet werden. Anstatt eines Energiereservekondensators C_{ER} sind mehrere Kondensatoren möglich. Es sind jedoch alternativ andere Energiespeicher, wie eine Brennstoffzelle, möglich. Der Energiereservekondensators C_{ER} ist jeweils auf einer ersten Seite mit der ersten Spannungsversorgungsschaltung PIC und der zweiten Spannungsversorgungsschaltung 10 verbunden. Auf der anderen Seite ist der Energiereservekondensators C_{ER} mit Masse verbunden.

Die erste Spannungsversorgungsschaltung PIC ist ein integrierter Schaltkreis, der noch weitere Funktionen aufweist. Hier sind jedoch nur die Funktionen bezüglich der Spannungsversorgung relevant. Die Spannungsversorgungsschaltung PIC wandelt die Spannung des Energiereservekondensators C_{ER} abwärts und stellt folgende Spannung bereit: die Spannung VZP sowie die Spannungspegel 1,9 Volt, 3,3 Volt und 4,9 Volt, die für die Elektronik des Steuergeräts erforderlich sind. Zusätzlich ist es möglich, dass auch externe Komponenten, die an das Steuergerät ECU angeschlossen sind, über die Spannungsversorgungsschaltung PIC versorgt werden können. Der Energiereservekondensators C_{ER} ist, wie oben angegeben, mit der zweiten Spannungsversorgungsschaltung 10 verbunden. Dabei ist der Energiereservekondensators C_{ER} mit einer Widerstandsschaltung R und einem ersten Messeingang eines 2-Punkt-SpannungsreglersVR verbunden. Die Widerstandsschaltung R kann sowohl ein einzelner Widerstand oder ein Widerstandnetzwerk sein. Auf der anderen Seite ist die Widerstandsschaltung zum einen mit einem zweiten Messeingang des 2-Punkt-Spannungsreglers VR verbunden und zum anderen mit einem ersten Eingangsschluss eines Transistors T1, hier das Source eines Feldeffekttransistors. Über einen Steuereingang ist der Spannungsregler VR mit dem Gate des Transistors T1 verbunden. Die Drain des Transistors T1 ist zum einen mit einem Spannungsausgang U_PASe und einem Pufferkondensator C1 verbunden, der auf seiner anderen Seite mit Masse verbunden ist. Über einen Steuereingang ist der Spannungsregler VR mit dem Mikrocontroller µC verbunden. Das Steuergerät ECU ist im Fahrzeug zentral auf dem Fahrzeugtunnel angeordnet. Dies ist der Standort, der bei einem Unfall als letztes beeinträchtigt wird. Es ist möglich, bei einer völlig ausgelagerten Beschleunigungssensorik das Steuergerät ECU an einem anderen Einbauort vorzusehen. Die bislang im Steuergerät ECU vorgesehene Beschleunigungssensorik wäre dann alleine auf dem Tunnel angeordnet. Das Steuergerät ECU ist wie oben beschrieben mit einer Mehrzahl von externen Sensoren, zumeist Beschleunigungssensoren oder Körperschallsensoren oder Drucksensoren oder Temperatursensoren oder Umfeldsensoren oder irgend welche anderen Typen von Sensoren, verbunden. Diese Sensoren werden über das Steuergerät ECU mit Energie versorgt, meist auch über die Leitung, über die die Daten von den Sensoren zum Steuergerät ECU übertragen werden.

Wie oben beschrieben, stellt die erste Spannungsversorgungsschaltung PIC die vier Pegel bereit, die alternativ auch weniger oder mehr sein können. Die zweite Spannungsversorgungsschaltung 10 weist durch die Reihenschaltung der Widerstandsschaltung R und des Transistors T1 eine Stromquelle auf. Der 2-Punkt-Regler VR misst die Spannung über der Widerstandsschaltung R, wobei in Abhängigkeit von dieser Messung der Transistor T1 beeinflusst wird. Diese Beeinflussung geschieht beispielsweise durch die Änderung des Source-Drain-Widerstands. Auch der Mikrocontroller µC kann durch eine hier nicht dargestellte Messung der bereitgestellten Spannungspegel auf den Zweipunktsregler VR Einfluss nehmen. Beispielsweise durch Ein- oder Ausschalten des Spannungsreglers VR. Der Kondensator C1 dient zur Pufferung der bereitgestellten Spannung. Die Sensoren sind dann an die Leitung U_PASE angeschlossen, beispielsweise als Quasibus.

Figur 2 zeigt eine alternative Schaltung des erfindungsgemäßen Steuergeräts. Wiederum ist der Energiereservekondensators C_{ER} auf der einen Seite mit Masse verbunden und auf der anderen Seite mit der ersten Spannungsversorgungsschaltung PIC, mit einer Komponente der zweiten Spannungsversorgungsschaltung sowie mit dem Spannungsregler selbst, der auch mit Masse verbunden ist. Wiederum ist der Spannungsregler VR mit dem Gate des Transistors T1 verbunden, um auf den Transistor T1 Einfluss zu nehmen. Über einen Messeingang ist der Spannungsregler VR wiederum mit der Ausgangsspannung U_PASe verbunden, um diese zu messen und entsprechend zu regeln. Die Widerstandsschaltung R ist zum einen an die Drain des Transistors T1 angeschlossen und dabei auch an den Ausgang U_PASe, um den Strom in den Kondensator C1 zu begrenzen, und auf der anderen Seite mit dem Kondensator C1 verbunden, der auf seiner anderen Seite mit Masse verbunden ist. Vorliegend liegt keine Stromquelle mehr vor, sondern eine einfache Aus/ Einschaltung für die Spannung auf die Leitung U_PASe. Hier ist alternativ der Steuer- bzw. Regeleingang für den Spannungsregler VR weggelassen worden, da dieser auch autark vorgesehen sein kann.

## Patentansprüche

1. Steuergerät für den Personenschutz mit
- einer Energiereserve (C_{ER}), die mittels einer Batteriespannung geladen wird und aus der das Steuergerät (ECU) mit Energie versorgt wird
- einer ersten Spannungsversorgungsschaltung (PIC), die eine Spannung (V_{ER}) der Energiereserve (C_{ER}) derart abwärts wandelt, dass die erste Spannungsversorgungsschaltung (PIC) mehrere vorgegebene Spannungspegel (VZP, 1,9 V, 3,3 V, 4,9 V) für den Betrieb des Steuergeräts (ECU) bereitstellt
- einer zweiten Spannungsversorgungsschaltung (10), die ebenfalls mit der Energiereserve (C_{ER}) verbunden ist und mittels einer Widerstandsschaltung, (R) wenigstens einem Transistor (T1) und einem Spannungsregler (VR) wenigstens einen weiteren Spannungspegel (U_PASe) bereitstellt.

2. Steuergerät nach Anspruch 1, **dadurch gekennzeichnet, dass** die erste Spannungsversorgungsschaltung (PIC) eine Zündspannung (VZP) und wenigstens drei unterschiedliche Spannungspegel (1,9 V, 3,3 V, 4,9 V) bereitstellt.

3. Steuergerät nach Anspruch 1 oder 2, **dadurch gekennzeichnet, dass** der Spannungsregler (VR) als 2-Punkt-Spannungsregler ausgebildet ist.

4. Steuergerät nach einem der vorhergehenden Ansprüche, **dadurch gekennzeichnet, dass** die zweite Spannungsversorgungsschaltung (10) derart mit wenigstens einem externen Sensor verbunden ist, dass die zweite Spannungsversorgungsschaltung (10) die wenigstens einen externen Sensor mit dem wenigstens einen weiteren Spannungspegel (U_PASe) versorgt.

5. Steuergerät nach einem der vorhergehenden Ansprüche, **dadurch gekennzeichnet, dass** der Spannungsregler (VR) derart mit einem Prozessor (µC) verbunden ist, dass der Prozessor (µC) den Spannungsregler (VR) steuern kann.

6. Steuergerät nach einem der vorhergehenden Ansprüche, **dadurch gekennzeichnet, dass** der Spannungsregler (VR) derart mit der Widerstandsschaltung (R) verbunden ist, dass der Spannungsregler (VR) den wenigstens einen weiteren Spannungspegel (U_PASe) misst und in Abhängigkeit von dieser Messung den Transistor (T1) ansteuert.

7. Steuergerät nach einem der vorhergehenden Ansprüche, **dadurch gekennzeichnet, dass** der Prozessor (µC) derart mit der zweiten Spannungsversorgungsschaltung (10) verbunden ist, dass der Prozessor (µC) den wenigstens einen weiteren Spannungspegel CU_PASe) misst.

## Claims

1. Personal protection control device having
- an energy reserve (C_{ER}) which is charged by means of a battery voltage and from which the control device (ECU) is supplied with energy,
- a first voltage supply circuit (PIC) which converts a voltage (V_{ER}) from the energy reserve (CER) downwards, such that the first voltage supply circuit (PIC) makes available a plurality of predefined voltage levels (VZP, 1.9 V, 3.3 V, 4.9 V) for the operation of the control device (ECU),
- a second voltage supply circuit (10) which is also connected to the energy reserve (C_{ER}) and makes available at least one further voltage level (U_PASe) to at least one transistor (T1) and one voltage regulator (VR) by means of a resistance circuit (R).

2. Control device according to Claim 1, **characterized in that** the first voltage supply circuit (PIC) makes available an ignition voltage (VZP) and at least three different voltage levels (1.9 V, 3.3 V, 4.9 V).

3. Control device according to Claim 1 or 2, **characterized in that** the voltage controller (VR) is embodied as a 2-point voltage controller.

4. Control device according to one of the preceding claims, **characterized in that** the second voltage supply circuit (10) is connected to at least one external sensor in such a way that the second voltage supply circuit (10) supplies the at least one external sensor with the at least one further voltage level (U_PASe).

5. Control device according to one of the preceding claims, **characterized in that** the voltage controller (VR) is connected to a processor (µC) in such a way that the processor (µC) can control the voltage controller (VR).

6. Control device according to one of the preceding claims, **characterized in that** the voltage controller (VR) is connected to the resistance circuit (R) in such a way that the voltage controller (VR) measures the at least one further voltage level (U_PASe) and drives the transistor (T1) as a function of this measurement.

7. Control device according to one of the preceding claims, **characterized in that** the processor (µC) is connected to the second voltage supply circuit (10) in such a way that the processor (µC) measures the at least one further voltage level (U_PASe).

## Revendications

1. Appareil de commande pour la protection des personnes, présentant
- une réserve d'énergie (C_{ER}) chargée par une tension de batterie et par laquelle l'appareil de commande (ECU) est alimenté en énergie,
- un premier circuit (PIC) d'alimentation en tension qui abaisse la tension (V_{ER}) de la réserve d'énergie (C_{ER}) par le fait que le premier circuit (PIC) d'alimentation en tension prépare plusieurs niveaux prédéterminés de tension (VZP, 1,9 V, 3,3 V, 4,9 V) pour le fonctionnement de l'appareil de commande (ECU) et
- un deuxième circuit (10) d'alimentation en tension qui est également raccordé à la réserve d'énergie (C_{ER}) et qui prépare au moins un autre niveau de tension (U_PASe) au moyen d'un circuit de résistance (R), d'au moins un transistor (T1) et d'un régulateur de tension (VR).

2. Appareil de commande selon la revendication 1, **caractérisé en ce que** le premier (PIC) délivre une tension d'alimentation (VZP) et au moins trois niveaux différents de tension (1,9 V, 3,3 V, 4,9 V).

3. Appareil de commande selon les revendications 1 ou 2, **caractérisé en ce que** le régulateur de tension (VR) est configuré comme régulateur de tension 2 points.

4. Appareil de commande selon l'une des revendications précédentes, **caractérisé en ce que** le deuxième circuit (10) d'alimentation en tension est relié à un premier détecteur externe de telle sorte que le deuxième circuit (10) d'alimentation en tension alimente le ou les détecteurs externes en au moins un autre niveau de tension (U_PASe).

5. Appareil de commande selon l'une des revendications précédentes, **caractérisé en ce que** le régulateur de tension (VR) est relié à un processeur (µC) de telle sorte que le processeur (µC) puisse commander le régulateur de tension (VR).

6. Appareil de commande selon l'une des revendications précédentes, **caractérisé en ce que** le régulateur de tension (VR) est relié au circuit de résistance (R) de telle sorte que le régulateur de tension (VR) mesure le ou les autres niveaux de tension (U_PASe) et commande le transistor (T1) en fonction de cette mesure.

7. Appareil de commande selon l'une des revendications précédentes, **caractérisé en ce que** le processeur (µC) est relié au deuxième circuit (10) d'alimentation en tension de telle sorte que le processeur (µC) mesure le ou les autres niveaux de tension (U_PASe).
